# EUROPÄISCHE PATENTANMELDUNG

(11) **EP 1 130 892 A2**
(43) Veröffentlichungstag der Anmeldung: **05.09.2001**
(21) Anmeldenummer: 01103103.6
(22) Anmeldetag: 09.02.2001
(51) Int. Cl.: H04M 3/22, H04M 3/533

(54) **Aufzeichnung von Telefongesprächen durch zentrale Sprachspeichereinrichtung**

(30) Priorität: 01.03.2000 DE 10009764
(71) Anmelder: SIEMENS AKTIENGESELLSCHAFT, 80333 München (DE)
(72) Erfinder: Offer, Gero, 82205 Gilching (DE)

(57) **Zusammenfassung**

Intelligentes Telekommunikationsnetz (IN) mit einer zentralen Sprachspeichereinrichtung (2), wobei der Sprachspeichereinrichtung eine Ansteuereinrichtung (3) zur Auslösung und Ausführung einer Gesprächsaufzeichnung nach einem Verbindungsaufbau zwischen zwei Endgeräten (P1, P2) des Telekommunikationsnetzes in Abhängigkeit von einem seitens eines der Endgeräte (P1) übermittelten Triggersignal und/oder von bei der Ansteuereinrichtung gespeicherten Bedingungs-Daten zugeordnet ist.

## Beschreibung

Die Erfindung betrifft ein intelligentes Telekommunikationsnetz (IN) mit einer zentralen Sprachspeichereinrichtung sowie ein Verfahren zum Betreiben eines solchen Telekommunikationsnetzes.

Das telefonische Gespräch ist aus dem privaten wie geschäftlichen Leben nicht mehr wegzudenken und hat mit der explosionsartigen Entwicklung der Mobilfunktechnik in beiden Lebensbereichen noch erheblich an Bedeutung gewonnen. Hierzu hat auch die immer größer werdende Breite des Angebotes an Waren und Dienstleistungen in bzw. unter Nutzung von Telekommunikationsnetzen beigetragen. Auch hochwertige Waren und Dienstleistungen, deren Lieferung in der Vergangenheit nur auf der Grundlage eines schriftlichen Kaufvertrages möglich war, werden heute aufgrund telefonisch geschlossener Vereinbarungen geliefert bzw. erbracht und bezahlt.

Das sehr alte Bedürfnis nach einer einfachen und zuverlässigen Aufzeichnung von Telefongesprächen hat hierdurch eine erhöhte Relevanz bekommen.

Die lokale Aufzeichnung von Telefongesprächen mittels eines an das Endgerät des Nutzers angeschlossenen Aufzeichnungsgerätes (beispielsweise Tonband- bzw. Diktiergerätes) ist seit langem bekannt und wird in einem gewissen - allerdings vergleichsweise geringen - Umfang auch praktiziert. Eine vergleichbare Lösung stellt die Sprachspeicherung in Sprachcomputern von Firmen, beispielsweise Direktbanken, dar, die zur Sicherung ihrer Geschäftsabläufe in besonderem Maße auf eine Dokumentierung telefonisch erhaltener Aufträge angewiesen sind. Diese lokalen Lösungen erfordern einen hohen Implementierungsaufwand beim Nutzer, mit den entsprechenden Geräte- und Arbeitskosten. Zudem erfordern solche Lösungen einen laufenden Betriebsaufwand. Insbesondere für kleinere Firmen und Privatleute ergibt sich damit insgesamt ein ungünstiges Kosten-/Nutzen-Verhältnis.

In den modernen Telekommunikationsnetzen sind Anrufbeantworter-Funktionen auf der Basis von zentralen Sprachspeichereinrichtungen implementiert, die der Nutzer des Systems als speziellen (gebührenfreien oder gebührenpflichtigen) Dienst zur Verfügung gestellt bekommt.

Der Erfindung liegt die Aufgabe zugrunde, eine einfache, kostengünstige und für prinzipiell jeden Nutzer ohne weiteres verfügbare Möglichkeit zur Aufzeichnung von Telefongesprächen bereitzustellen.

Diese Aufgabe wird hinsichtlich ihres Vorrichtungsaspektes durch ein Telekommunikationsnetz mit den Merkmalen des Anspruchs 1 und hinsichtlich ihres Verfahrensaspektes durch ein Betriebsverfahren mit den Merkmalen des Anspruchs 11 gelöst.

Die Erfindung schließt den grundlegenden Gedanken ein, in einem intelligenten Telekommunikationsnetz eine Sprachspeicherung während des Bestehens einer Verbindung zwischen zwei Endgeräten zu implementieren. Speziell erfolgt die Aufzeichnung wahlweise in Abhängigkeit von einem Triggersignal, das von (mindestens) einem der Endgeräte übermittelt wird, und/ oder von im System - d. h. beim Dienst-Server - gespeicherten Bedingungs-Daten.

Die erwähnten Bedingungs-Daten sind zweckmäßigerweise in einem ersten Nutzerprofilspeicher gespeichert, der eine Mehrzahl von (in üblicher Weise bevorzugt dynamisch konfigurierbaren) Speicherbereichen aufweist, die über die zugehörige Endgerätenummer des Nutzers adressierbar sind. Die Speicherbereiche enthalten jeweils einen Bedingungs-Datensatz zur bedingten Auslösung einer Gesprächsaufzeichnung. Ein solcher Datensatz umfaßt insbesondere eine Rufnummernliste von Endgeräten, für die der Nutzer generell eine Aufzeichnung der Gespräche wünscht, und/oder weitere Daten, die zusätzliche "feste" Bedingungen beschreiben (beispielsweise Uhrzeiten).

Auf der anderen Seite umfaßt die Steuerung für die Sprachspeichereinrichtung Mittel zum Empfang von Triggersignalen, die am Endgerät des Nutzers - beispielsweise durch Betätigung eines Hot-Key oder einer Tastenkombination oder in Verbindung mit einem sogenannten "Prefix" zu einem abgehenden Ruf - generiert werden.

Weiterhin umfaßt die Steuerung (Ansteuereinrichtung) Mittel zum Empfang von Statussignalen bezüglich der aufzuzeichnenden Verbindung, also insbesondere zum Empfang eines Rufannahmesignals ("CONN" im ISDN-System), eines Verbindungsunterbrechungssignals ("DISC" im ISDN-System) bzw. eines während des Bestehens einer Verbindung abgegebenen Statussignals ("STAT").

In einer vorteilhaften Ausgestaltung des Erfindungsgedankens ist im Rahmen des die Gesprächsaufzeichnung bereitstellenden IN-Dienstes auch eine Bearbeitung der Aufzeichnungen vorgesehen. Diese besteht insbesondere in der Hinzufügung einer Steuer- und/oder Zusatzinformation bzw. einer Sprache-Text-Wandlung zur Bereitstellung der aufgezeichneten Information als Textdatei. Weiterhin kann die Bearbeitung eine Übersetzung oder auch - im Zusammenhang mit einem Knowledge-Management-System - eine Inhaltserschließung nach vorbestimmten Deskriptoren o. ä. umfassen.

Die Bearbeitung erfolgt auf der Grundlage von vorgespeicherten und/oder im Zusammenhang mit der konkreten Gesprächsverbindung aktuell übermittelten Zusatzdaten, die die Gestalt von Text- oder Steuerdaten oder auch von Sprachdaten haben. Hierzu gehören insbesondere die Gesprächsteilnehmer betreffende Identifikations- und ggf. auch Authentisierungsdaten, vorkonfigurierte oder aktuell übermittelte Begleitinformationen (wie etwa Verteiler-, Termin- oder Bearbeitungshinweise für einen Dritten) oder den Bearbeitungs- bzw. einen Weiterleitungsvorgang betreffende Steuerdaten.

In einer weiteren bevorzugten Ausführung umfaßt der IN-Dienst Weiterleitungsfunktionen. Diese können sich direkt auf die Sprachaufzeichnung oder auf ein Bearbeitungsergebnis beziehen und insbesondere in der Weiterleitung der Sprachnachricht an eine vorbestimmte Endgeräte-Rufnummer oder in der Weiterleitung einer aus der Sprachnachricht erzeugten Textdatei an eine vorbestimmte E-Mail-Adresse eines mit dem Telekommunikationsnetz verknüpften Datennetzes bestehen.

Der entsprechenden Bearbeitungs- bzw. Sendeeinrichtung zur Realisierung der vorteilhaften Zusatzfunktionen ist bevorzugt ein zweiter Nutzerprofilspeicher zugeordnet, in dem wiederum eine Mehrzahl von Speicherbereichen zur Adressierung über die Endgerätenummer eines Nutzers des Dienstes zur Speicherung von fest voreingestellten Bearbeitungs- bzw. Weiterleitungskriterien vorgesehen ist.

Insgesamt ist im System zur Begrenzung der beim Dienst-Server benötigten Speicher- und Steuerressourcen ein Aufzeichnungs-Management vorgesehen, das insbesondere ein Überschreiben von nicht weitergeleiteten und nicht abgerufenen Aufzeichnungen nach einer bestimmten Speicherdauer, die Übergabe von Aufzeichnungen an einen externen Archivierungsspeicher o. ä. realisiert. Diese Verwaltungsfunktion kann im Zusammenhang mit der Implementierung der Bearbeitungs- und Weiterleitungsfunktion realisiert sein.

Insgesamt ist die vorgeschlagene Funktionalität unter weitgehender Nutzung der sogenannten Unified Messaging Struktur eines modernen intelligenten Netzes realisierbar. Auch die an sich bekannten Voice-Mail-Boxen des ISDN und der Mobilfunknetze sind in das vorgeschlagene System einzubinden.

Die vorgeschlagene Lösung stellt für die Nutzer einen neuen Mehrwertdienst bereit, der eine wertvolle Dokumentation geschäftlicher (oder auch privater) Vorfälle ohne jede eigene materielle Vorleistung ermöglicht, und sollte daher grundsätzlich als gebührenpflichtiger Dienst angeboten werden. Die Vergebührung kann pauschal (etwa mit einer Monatspauschale) erfolgen, wird aber bevorzugt nutzungsbezogen zu gestalten sein, also insbesondere in Abhängigkeit von dem aufgezeichneten Datenvolumen und/oder der Anzahl von Gesprächsaufzeichnungen pro Zeiteinheit. Bearbeitungs- und Weiterleitungsfunktionen können hierbei gesondert vergebührt werden oder auch (jedenfalls bis zu einer gewissen Komplexität) inklusive sein. Entsprechende Vergebührungsmechanismen sind grundsätzlich bekannt und werden in modernen Telekommunikationssystemen auch angewandt, so daß sich eine detailliertere Beschreibung hier erübrigt.

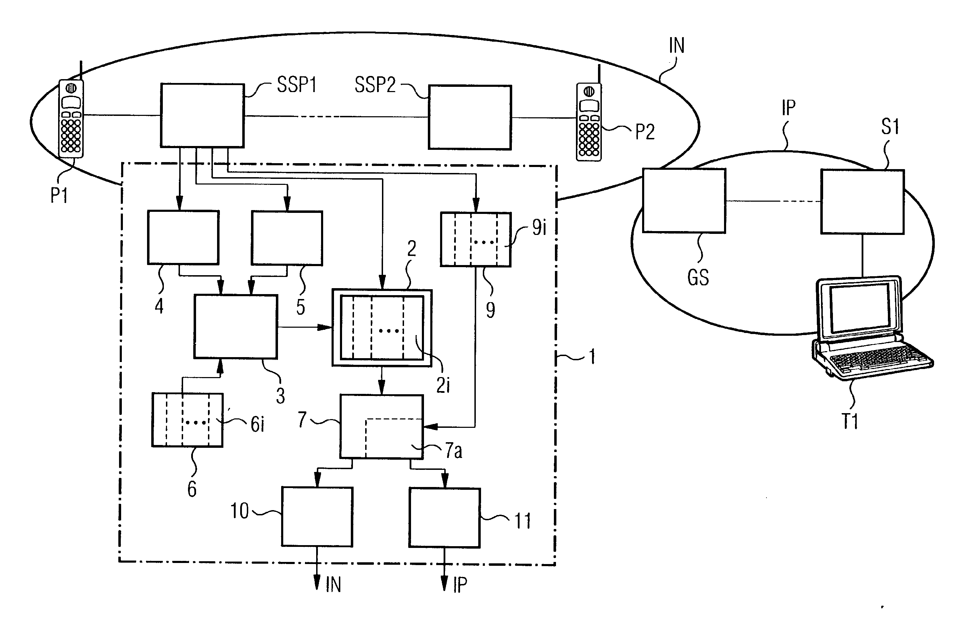

Vorteile und Zweckmäßigkeiten der Erfindung ergeben sich im übrigen aus den Unteransprüchen sowie der nachfolgenden Beschreibung eines bevorzugten Ausführungsbeispiels anhand der Figur.

Diese zeigt ein intelligentes Telekommunikationsnetz IN - das als leitungsgebundenes Netz (Festnetz) oder Mobilfunknetz ausgebildet sein kann - mit zwei über jeweils eine Vermittlungsstelle SSP1 bzw. SSP2 angeschlossenen Fernsprechendgeräten P1 bzw. P2. Über einen Gateway-Server GS ist mit dem Telekommunikationsnetz IN ein Datennetz IP verbunden, an welches über einen Zugangs-Server S1 ein Datenendgerät T1 angeschlossen ist. Der Gesprächsaufzeichnungsdienst wird auf einem Dienst-Server 1 realisiert. Dessen Funktionen sind in der Figur in Form eines Funktions-Blockschaltbildes dargestellt, und in der nachfolgenden Beschreibung wird dementsprechend jeweils von "Einrichtungen" gesprochen. Es versteht sich für den Fachmann, daß die Implementierung zu einem großen Teil softwaremäßig in einer Prozessorstruktur erfolgt, bei der diese Einrichtungen nicht in jedem Fall strukturell abgegrenzt sind.

Der Server 1 umfaßt eine Sprachspeichereinrichtung 2 mit einer Vielzahl von einzeln adressierbaren Speicherbereichen 2i, die jeweils einem registrierten Nutzer des Dienstes zugewiesen sind und aufgrund von dessen Endgeräte-Rufnummer adressiert werden können. Der Sprachspeichereinrichtung 2 ist eine Ansteuereinheit 3 zur Steuerung der einzelnen Gesprächsaufzeichnungsvorgänge zugeordnet, welche ihrerseits eingangsseitig mit einer Statussignal-Empfangseinheit 4 und einer Triggersignal-Empfangseinheit 5 sowie einem ersten Nutzerprofilspeicher 6 verbunden ist.

Die Statussignal-Empfangseinheit 4 sowie die Triggersignal-Empfangseinheit 5 sind im dargestellten Beispiel mit der ersten Vermittlungsstelle SSPl bzw. (über diese) mit dem ersten Fernsprechendgerät P1 verbunden. Sie empfangen von dort Statussignale bezüglich des Bestehens einer Verbindung zwischen den Fernsprechendgeräten P1 und P2 bzw. vom Endgerät P1 ausgehende bzw. an diesem eingegebene Triggersignale für Gesprächsaufzeichnungen. Derartige Triggersignale gibt das Endgerät insbesondere bei Betätigung bestimmter Tastenkombinationen oder eines Hot-Key zur Einleitung oder Beendigung einer Aufzeichnung während eines laufenden Gespräches aus.

Der erste Nutzerprofilspeicher 6 umfaßt in einer zur Sprachspeichereinrichtung 2 korrespondierenden Bereichsanordnung eine Mehrzahl von jeweils einem Nutzer zugewiesenen Speicherbereichen 6i, in denen jeweils ein Bedingungs-Datensatz für die im Rahmen des Dienstes realisierten Gesprächsaufzeichnungen in Form eines Nutzerprofiles abgelegt ist. Hierbei handelt es sich insbesondere um eine Liste von Teilnehmer-Rufnummern für die der Nutzer des Endgerätes P1 eine Aufzeichnung seiner Gespräche wünscht.

Ausgangsseitig ist mit der Sprachspeichereinrichtung 2 eine Bearbeitungseinrichtung 7 verbunden, die wiederum eine Vielzahl von Unter-Funktionseinheiten umfassen kann. In der Figur ist als eine solche eine Sprache-Text-Wandlerstufe 7a gezeigt. Die Bearbeitungseinrichtung 7 ist eingangsseitig mit einem zweiten Nutzerprofilspeicher 8 verbunden, dessen Aufbau aus einzelnen Speicherbereichen 8i demjenigen des ersten Nutzerprofilspeichers 6 und der Sprachspeichereinrichtung 2 entspricht. Hier sind Nutzerprofile hinsichtlich einer Weiterbearbeitung aufgezeichneter Gesprächsnachrichten abgelegt.

Weiterhin ist die Bearbeitungseinrichtung 7 auch mit der Statussignal-Empfangseinrichtung 4 und der Triggersignal-Empfangseinrichtung 5 verbunden, um von diesen zusätzliche Steuersignale für eine Weiterbearbeitung der Gesprächsaufzeichnung zu erhalten, wie sie beispielsweise durch den Nutzer an seinem Endgerät P1 eingegeben werden können. Schließlich ist ein weiterer Eingang der Bearbeitungseinrichtung 7 mit einem Zusatzinformations-Speicher 9 verbunden, in dem (jeweils wieder in den einzelnen Nutzern zugewiesenen Speicherbereichen 9i) bestimmte Zusatzinformationen abgelegt bzw. zwischengespeichert sein können, die der eigentlichen Gesprächsaufzeichnung in der Bearbeitungseinrichtung 7 hinzugefügt werden.

Ausgangsseitig sind mit der Bearbeitungseinrichtung 7 im dargestellten Beispiel zwei Sendeeinrichtungen 10 und 11 verbunden, von denen die erste Sendeeinrichtung 10 zur Weiterleitung von Sprachnachrichten an vorbestimmte Rufnummern im Telekommunikationsnetz IN - beispielsweise auch an das erste Endgerät P1 selbst - ausgebildet ist, während die zweite Sendeeinrichtung 11 zur Übermittlung von durch die Sprache-Text-Wandlerstufe 7a erstellten Textdateien per E-Mail an Datenendgeräte im Datennetz IP (ggf. auch ein eigenes Datenendgerät des Nutzers des Fernsprechendgerätes P1) ausgebildet ist.

Schließlich ist mit der Sprachspeichereinrichtung 2 eine Gebührenerfassungseinrichtung 12 verbunden, die den Gesprächsaufzeichnungsdienst in Abhängigkeit von der Aufzeichnungsdauer bzw. aufgezeichneten Datenmenge vergebührt.

Mit einer solchen Konfiguration lassen sich beispielsweise die folgenden Applikationen realisieren:
- Wertpapierorders per Telefon. Hier umfaßt das Nutzerprofil die Endgeräte-Rufnummern der Kunden des Brokers, und die Gesprächsaufzeichnung erfolgt zusätzlich gesteuert durch Tasteneingaben an dessen Endgerät speziell für Gespräche, bei denen Orders ausgesprochen werden. Im Rahmen einer Nachbearbeitung der Aufzeichnungen werden umgehend Orderdateien erstellt, die zum PC des Brokers geroutet werden und dort eine unmittelbar an das Telefonat anschließende Abwicklung über das Datennetz (Internet) ermöglichen.
- Service-Hotline. Hierbei erfolgt die Aufzeichnung aller eingehenden Gespräche, am einfachsten ohne Filterung durch ein Nutzerprofil, aber bevorzugt mit der Möglichkeit der Triggerung oder Beendigung einer Aufzeichnung während eines laufenden Gespräches durch Tasteneingaben des Operators. Während der Aufnahme des Anliegens oder unmittelbar danach kann die Aufzeichnung mit durch den Operator erstellten Zusatzinformationen versehen werden, beispielsweise einer dem Inhalt des Anliegens des Anrufers angepaßten Weiterleitungs-Adresse.
   Die Sprachnachricht unmittelbar oder eine hieraus durch Sprache-Text-Wandlung erstellte Textdatei werden dann einem für das Anliegen des Anrufers fachlich zuständigen Servicetechniker zugestellt. In ähnlicher Weise - dies aber bereits unter Auswertung des Ortsvorwahl-Bestandteiles der Teilnehmer-Rufnummer als Zusatzinformation - können aufgezeichnete Gesprächsnachrichten entsprechend territorialen Zuständigkeiten der Servicemitarbeiter verteilt werden. Parallel hierzu ist eine zentrale Dokumentation der eingegangenen Anliegen/Aufträge zum Zwecke der Gesamtüberwachung des Servicebetriebes und für statistische Auswertungen in vorteilhafter Weise möglich.
- Vertriebssystem mit Handelsvertretern bzw. "Außendienst". Gewissermaßen reziprok zum Ablauf bei der vorgenannten Service-Hotline werden hier bei den einzelnen Vertretern bzw. Außendienstmitarbeitern auflaufende Kundenanrufe mit Anfragen oder Bestellungen im Rahmen des Gesprächsaufzeichnungsdienstes zentral aufgezeichnet und - wiederum als Sprach- oder Textnachricht via Telekommunikations- oder Datennetz - in Abhängigkeit von einer inhaltlichen Klassifikation bei der Aufnahme des Anrufes an Dritte weitergeleitet oder durch den Aufnehmenden zu einer späteren Auswertung selbst wieder abgerufen. Der Aufnehmende kann dabei Zusatzinformationen per Spracheingabe oder DTMF-Verfahren o. ä. beistellen. Auch hier ermöglicht die vorgeschlagene Lösung zugleich eine Gesamtdokumentation und Auswertung der Kundenkontakte.

Die Ausführung der Erfindung ist nicht auf die oben beschriebene Konfiguration und die skizzierten Applikationen beschränkt, sondern ebenso in einer Vielzahl von Abwandlungen möglich, die im Rahmen fachgemäßen Handelns liegen.

## Patentansprüche

1. Intelligentes Telekommunikationsnetz (IN) mit einer zentralen Sprachspeichereinrichtung (2),
**dadurch gekennzeichnet**, daß
der Sprachspeichereinrichtung eine Ansteuereinrichtung (3) zur Auslösung und Ausführung einer Gesprächsaufzeichnung nach einem Verbindungsaufbau zwischen zwei Endgeräten (P1, P2) des Telekommunikationsnetzes in Abhängigkeit von einem seitens eines der Endgeräte (P1) übermittelten Triggersignal und/oder von bei der Ansteuereinrichtung gespeicherten Bedingungs-Daten zugeordnet ist.

2. Telekommunikationsnetz nach Anspruch 1,
**dadurch gekennzeichnet**, daß
die Sprachspeichereinrichtung (2) und die Ansteuereinrichtung (3) im Dienst-Server (1) eines registrier- und insbesondere gebührenpflichtigen IN-Dienstes implementiert sind, wobei jedem Nutzer eine endgerätbezogene Speicheradresse (2i) der Sprachspeichereinrichtung zugeordnet ist.

3. Telekommunikationsnetz nach Anspruch 1 oder 2,
**dadurch gekennzeichnet**, daß
die Ansteuereinrichtung (3) einen ersten Nutzerprofilspeicher (6) mit einer Mehrzahl von Speicherbereichen (6i) aufweist, in denen jeweils in Zuordnung zu Endgerätenummern Bedingungs-Datensätze zur bedingten Auslösung einer Gesprächsaufzeichnung gespeichert sind, die insbesondere Endgeräte-Rufnummernlisten umfassen.

4. Telekommunikationsnetz nach einem der vorangehenden Ansprüche,
**dadurch gekennzeichnet**, daß
die Ansteuereinrichtung (3) eine Statussignal-Empfangseinrichtung (4) zum Empfang eines Rufannahmesignals und eines Verbindungsunterbrechungssignals bzw. eines Statussignals und eine Triggersignal-Empfangseinrichtung (5) zum Empfang von Triggersignalen, insbesondere von an einem Endgerät (P1) über Hot-Key oder eine Tastenkombination erzeugten Informationssignalen, aufweist.

5. Telekommunikationsnetz nach einem der vorangehenden Ansprüche,
**dadurch gekennzeichnet**, daß
der Sprachspeichereinrichtung (2) eine Bearbeitungseinrichtung (7) zugeordnet ist, die zur Hinzufügung einer Steuer- oder Zusatzinformation und/oder zur Sprache-Text-Wandlung von Gesprächsaufzeichnungen ausgebildet ist.

6. Telekommunikationsnetz nach Anspruch 5,
**dadurch gekennzeichnet**, daß
die Bearbeitungseinrichtung (7) einen, insbesondere mit dem Nutzer-Endgerät (P1) verbundenen bzw. verbindbaren, Zusatzinformations-Zwischenspeicher (9) zur Speicherung von verbindungsbezogenen Daten und/oder über das Nutzer-Endgerät zusätzlich übermittelten Sprach-, Text- oder Steuerdaten aufweist.

7. Telekommunikationsnetz nach einem der vorangehenden Ansprüche,
**dadurch gekennzeichnet**, daß
der Sprachspeichereinrichtung (2) eine Sendeeinrichtung (10, 11) zur Weiterleitung von Gesprächsaufzeichnungen in Abhängigkeit von einem seitens eines der Endgeräte (P1) übermittelten Weiterleitungssignals und/oder von bei der Sendeeinrichtung gespeicherten Bedingungs-Daten, insbesondere an eine vorbestimmte Endgeräte-Rufnummer, zugeordnet ist.

8. Telekommunikationsnetz nach einem der Ansprüche 5 bis 7,
**dadurch gekennzeichnet**, daß
der Bearbeitungseinrichtung (7) und/oder der Sendeeinrichtung (10, 11) ein zweiter Nutzerprofilspeicher (8) mit einer Mehrzahl von Speicherbereichen (8i) zugeordnet ist, in denen jeweils in Zuordnung zu Endgerätenummern Bedingungs-Datensätze zur bedingten Bearbeitung und/oder Weiterleitung von Gesprächsaufzeichnungen ausgebildet ist.

9. Telekommunikationsnetz nach einem der Ansprüche 5 bis 7,
**dadurch gekennzeichnet**, daß
die Sendeeinrichtung (10, 11) der Bearbeitungseinrichtung (7) zur Weiterleitung von vorab bearbeiteten Gesprächsaufzeichnungen, insbesondere an eine vorbestimmte E-Mail-Adresse eines mit dem Telekommunikationsnetz (IN) verknüpften Datennetzes (IP), nachgeschaltet ist.

10. Telekommunikationsnetz nach einem der Ansprüche 5 bis 9,
**dadurch gekennzeichnet**, daß
die Bearbeitungseinrichtung (7) und/oder Sendeeinrichtung (10, 11) eine Gesprächsnachrichten-Verwaltungseinrichtung zur Verwaltung des Speicherinhaltes der Sprachspeichereinrichtung, insbesondere zum Überschreiben oder zur Überführung von Gesprächsaufzeichnungen in einen Archivierungsspeicher aufgrund dienstüblicher Kriterien und/oder von nutzerseitig vorgegebenen bzw. aktuell übermittelten Steuersignalen bilden.

11. Verfahren zum Betreiben eines intelligenten Telekommunikationsnetzes (IN),
**dadurch gekennzeichnet**, daß
eine netzinterne, zentrale Gesprächsaufzeichnung während des Bestehens einer Verbindung zwischen zwei Endgeräten (P1, P2) ausgeführt wird.

12. Verfahren nach Anspruch 11,
**dadurch gekennzeichnet**, daß
die Gesprächsaufzeichnung in Abhängigkeit von einem seitens eines der Endgeräte (P1) übermittelten Triggersignals und/oder von vorgespeicherten Bedingungs-Daten durchgeführt wird.

13. Verfahren nach Anspruch 11 oder 12,
**gekennzeichnet durch**
einen dem Schritt der Sprachspeicherung nachgeordneten Bearbeitungsschritt, insbesondere zur Hinzufügung einer Steuer- und/oder Zusatzinformation und/oder zur Sprache-Text-Wandlung.

14. Verfahren nach einem der Ansprüche 11 bis 13,
**gekennzeichnet durch**
einen dem Schritt der Sprachspeicherung und wahlweise einem Schritt der-Bearbeitung nachgeordneten Schritt der Weiterleitung der Gesprächsaufzeichnung, insbesondere an eine vorbestimmte Endgeräte-Rufnummer oder eine vorbestimmte E-Mail-Adresse eines mit dem Telekommunikationsnetz (IN) verknüpften Datennetzes (IP).
